# EUROPEAN PATENT APPLICATION

(11) **EP 0 987 648 A1**
(43) Date of publication of application: **22.03.2000**
(21) Application number: 98307539.1
(22) Date of filing: 16.09.1998
(51) Int. Cl.: G06K 11/00, G06F 3/033

(54) **Foot operated pointing device**

(71) Applicant: Jensen, Per Langgaard, 1300 Copenhagen K (DK); Jensen, John Balle, 1300 Copenhagen K (DK)
(72) Inventor: Jensen, Per Langgaard, 1300 Copenhagen K (DK); Jensen, John Balle, 1300 Copenhagen K (DK)
(74) Representative: Haley, Stephen

(57) **Abstract**

A computer mouse is arranged to be operated by a user's foot. The mouse comprises a foot pad on which the user's foot can rest in use, and a first track. A second track is arranged to slide on the first track and is substantially perpendicular to the first track. The foot pad is slidably retained on the second track. A first sensing mechanism detects movement of the foot pad with respect to the first track, a second sensing mechanism for detects movement of the foot pad with respect to the second track and means for outputting a position signal dependent upon the outputs of the first and second sensing mechanisms is provided.

## Description

This invention relates to a computer mouse. A computer mouse, well known in the art, is a common device for enabling a user to control the position of a cursor on a computer screen. It is usually operated with movement of the hand of an operator and has one, two or more buttons on it for enabling selection of functions dependent upon the cursor position.

Whilst such a computer mouse is very popular, and is almost a standard feature on most new personal computers, it does have a number of problems associated with it. In particular, prolonged use of the mouse has been known to cause injury to the wrist and hand of a user. As computer use becomes more frequent and the time spent using computers increases, such injuries have become more prevalent.

In addition, there are many potential users of a computer who do not have full use of their hands and/or arms, and operation of a computer mouse can therefore be difficult for them. Furthermore, another disadvantage of a standard mouse is that it requires the use of one hand, restricting the ability of a user to operate any keyboard attached to the personal computer whilst operating the mouse.

The present invention seeks to overcome the above and other problems.

According to the present invention there is provided a computer mouse arranged to be operated by a user's foot, the mouse comprising:
a foot pad on which the user's foot can rest in use;
a first track;
a second track arranged to slide on the first track and substantially perpendicular to the first track, the foot pad being slidably retained on the second track;
a first sensing mechanism for detecting movement of the foot pad with respect to the first track;
a second sensing mechanism for detecting movement of the foot pad with respect to the second track; and
means for outputting a position signal dependent upon the outputs of the first and second sensing mechanisms.

The sensing mechanisms may each comprise a member having a plurality of markings and a sensor for determining the passage of the foot pad over the markings. The sensor may be an optical sensor, and the markings may be light absorbent and formed on a transparent member or may be slots in a rigid member. Each member may have two sets of markings, one adjacent to the other, each set of markings having a different spacing. In this case, the sensor may be arranged to be moved between the two sets of markings so that the relationship between the speed of movement of the foot pad and a cursor on a computer screen can be altered.

The first track may comprise two parallel tracks and the second track a single track slidable on the first track.

Each track may comprise one or more rails and slidable members retained therein. Alternatively, each track may comprise one or more rails and wheels slidably retained therein.

The foot pad may be attached to a pivot point, the pivot point arranged to be slidable in the direction of the first track.

The mouse may be arranged to generate an output dependent upon movement of the foot pad only when pressure is applied to the foot pad.

The foot pad may have one or more pressure sensitive buttons formed thereon. The pressure sensitive buttons may be activated by rotation of the foot around an axis perpendicular to the sole of the foot.

One example of the present invention will now be described with reference to the accompanying drawings, in which:
Figure 1 is a side perspective view of an un-assembled example of the present invention;

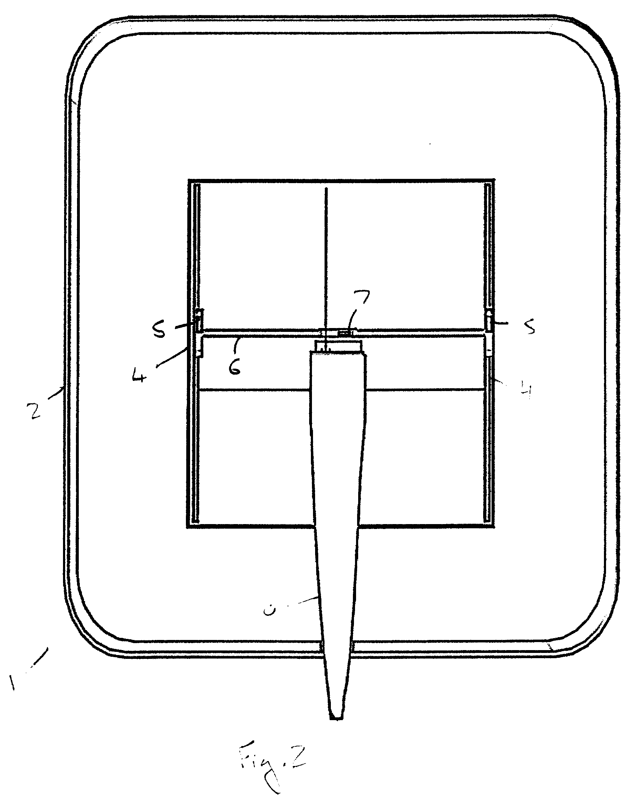

Figure 2 is a plan view of the example of figure 1;

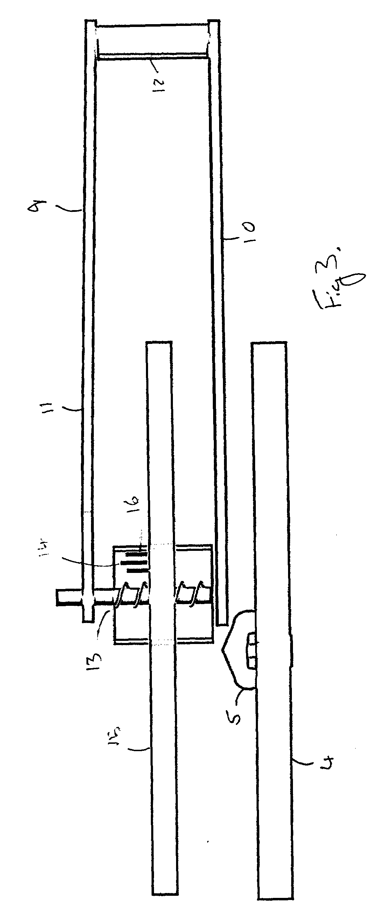

Figure 3 is a side view of the core components of the example of figures 1 and 2; and
Figure 4 shows a side view of a component of a position detection mechanism that may be employed in the example of the preceding figures.

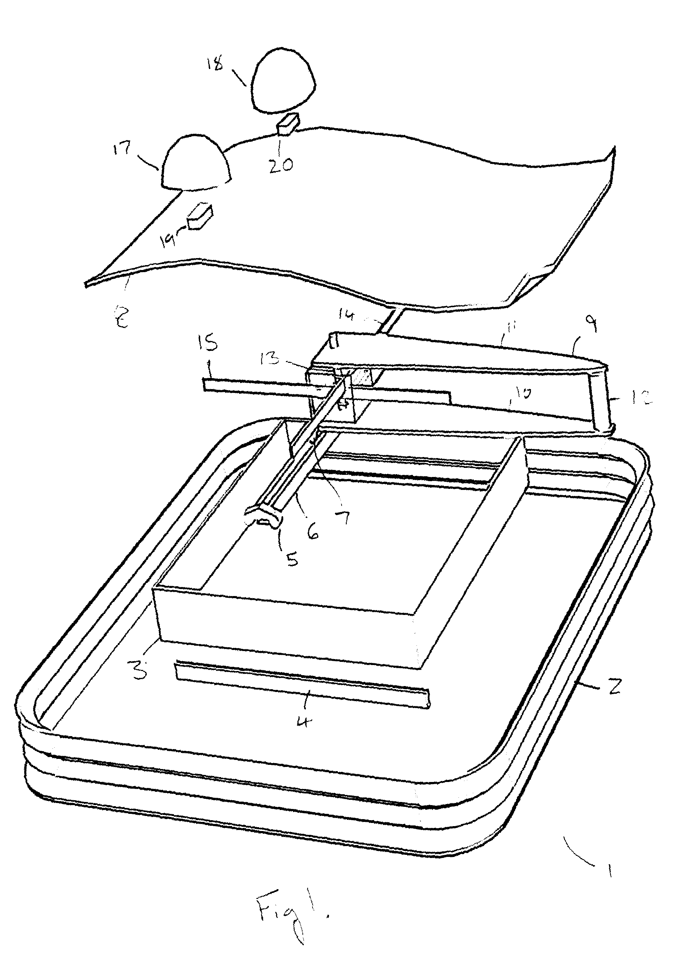

Referring to figure 1, a mouse 1 according to the invention has a base 2 which, in use, rests on a floor. Attached to the base 2 is a support frame 3 which supports a first track 4. The first track 4 is formed from two parallel rails and rollers 5 and supports a second track 6 comprising a rail 6 and a second set of rollers 7. The second set of rollers 7 support a frame 9 attached, in use, to a foot pad 8. The frame 9 comprises a lower plate 10 and an upper plate 11 pivotally attached to the lower plate 10 by a support member 12 and a sprung member 13. The provision of this pivotal attachment ensures that a user can operate the mouse 1 without having to keep their ankle rigid. The provision of the sprung member 13 also gives the mouse 1 downward flexibility when foot pressure is applied, and provides the ability for the mouse 1 to be pressure sensitive, with the detection mechanism (described below) being activated only when pressure is applied.

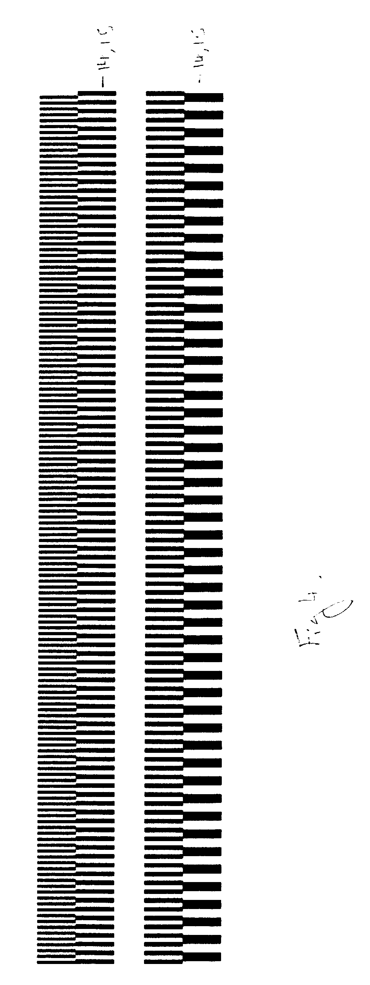

The mouse 1 has two detection mechanisms, each detection mechanism having a comb 14, 15, having markings thereon (see figure 4). The combs 14, 15 are arranged to be slidable within the support frame 3 and foot pad frame 9. Each comb 14, 15 has an optical sensor 16 associated therewith. The optical sensor detects movement of markings on the comb 14, 15 and provides an appropriate output to a computer to which the mouse 1 is attached in use. Each comb 14, 15, is arranged to detect movement in the direction of its respective track 6, 4.

As can be seen from figure 4, each comb 14, 15 may have more than one set of markings formed thereon. New set of markings may have a different width or spacing. The position of the sensor 16 can be moved, either by foot pressure or manual adjustment, so that it reads a different set of markings. The speed and accuracy with which a computer screen cursor can be moved by the mouse 1 in use can therefore be varied by a user to suit their particular preference of the appropriate application.

As can be seen from figure 1, the foot pad 8 has two buttons 17, 18, formed from electrical contacts 19, 20 covered in foam. These represent the buttons available on a standard computer mouse. The button arrangement may be changed so that the buttons are covered by a single member, with the first button 17 being operated by a user pivoting their foot and the member in one direction, and the second button 18 being operated by pivoting the foot and member in the opposite direction.

## Claims

1. A computer mouse arranged to be operated by a user's foot, the mouse comprising:
a foot pad on which the user's foot can rest in use;
a first track;
a second track arranged to slide on the first track and substantially perpendicular to the first track, the foot pad being slidably retained on the second track;
a first sensing mechanism for detecting movement of the foot pad with respect to the first track;
a second sensing mechanism for detecting movement of the foot pad with respect to the second track; and
means for outputting a position signal dependent upon the outputs of the first and second sensing mechanisms.

2. A mouse according to claim 1, wherein the sensing mechanisms each comprise a member having a plurality of markings and a sensor for determining the passage of the foot pad over the markings.

3. A mouse according to claim 1, wherein the sensor is an optical sensor, and the markings are light absorbent.

4. A mouse according to claim 1, wherein the sensor is an optical sensor, and the markings are slots in the member.

5. A mouse according to claim 2, 3 or claim 4, wherein each member has two sets of markings, one adjacent to the other, each set of markings having a different spacing.

6. A mouse according to claim 5, wherein the sensors are arranged to be moved between the two sets of markings.

7. A mouse according to any preceding claim wherein the first track comprises two parallel tracks and the second track a single track slidable on the first track.

8. A mouse according to any preceding claim, wherein each track comprises one or more rails and slidable members retained therein.

9. A mouse according to claim 1 to 7 wherein each track comprises one or more rails and wheels slidably retained therein.

10. A mouse according to any preceding claim, wherein the foot pad is attached to a pivot point, the pivot point arranged to be slidable in the direction of the first track.

11. A mouse according to any preceding claim, arranged to generate an output dependent upon movement of the foot pad only when pressure is applied to the foot pad.

12. A mouse according to any preceding claim, wherein the foot pad has one or more pressure sensitive buttons formed thereon.

13. A mouse according to claim 12, wherein the pressure sensitive buttons are activated by rotation of the foot around an axis perpendicular to the sole of the foot.
